# EUROPÄISCHE PATENTSCHRIFT

(11) **EP 1 920 267 B1**
(45) Veröffentlichungstag und Bekanntmachung des Hinweises auf die Patenterteilung: **16.09.2009**
(21) Anmeldenummer: 06762719.0
(22) Anmeldetag: 20.07.2006
(51) Int. Cl.: G01S 13/87

(54) **VERFAHREN ZUR RAUM- / LUFTRAUMÜBERWACHUNG**
METHOD FOR SURVEILLANCE OF SPACE/AIR SPACE
PROCEDE DE SURVEILLANCE D'UN ESPACE/D'UN ESPACE AERIEN

(30) Priorität: 02.09.2005 DE 102005041705
(43) Veröffentlichungstag der Anmeldung: 14.05.2008
(73) Patentinhaber: Rheinmetall Air Defence AG, 8050 Zürich (CH)
(72) Erfinder: HONIKEL, Marc, CH-8707 Uetikon (CH); BERGER, Hanspeter, CH-8181 Höri (CH)
(74) Vertreter: Dietrich, Barbara
(86) Internationale Anmeldenummer: PCT/EP2006/007127
(87) Internationale Veröffentlichungsnummer: WO 2007/028454

(56) Entgegenhaltungen:
- US-A- 5 448 243
- US-A- 6 002 358
- US-B1- 6 338 011
- ALEXIEV K M ET AL: "A hough transform track initiation algorithm for multiple passive sensors" INFORMATION FUSION, 2000. FUSION 2000. PROCEEDINGS OF THE THIRD INTERNATIONAL CONFERENCE ON JULY 10-13, 2000, PISCATAWAY, NJ, USA,IEEE, Bd. 1, 10. Juli 2000 (2000-07-10), Seiten TuB211-TuB216, XP010509123 ISBN: 2-7257-0000-0
- CHENG HONGWEI ET AL: "A joint probabilistic data association algorithm for distributed multisensor system in jamming and low-RCS target environment" AEROSPACE AND ELECTRONICS CONFERENCE, 1997. NAECON 1997., PROCEEDINGS OF THE IEEE 1997 NATIONAL DAYTON, OH, USA 14-17 JULY 1997, NEW YORK, NY, USA,IEEE, US, Bd. 2, 14. Juli 1997 (1997-07-14), Seiten 1002-1008, XP010242943 ISBN: 0-7803-3725-5

## Beschreibung

Die Erfindung betrifft ein Verfahren zur Zuordnung von 2D Messungen eines Sensorverbundes, insbesondere für die Flugabwehr.

Aus der EP 0 205 794 A1 ist ein derartiges Rundsuchsystem zur Raum-/ Luftraumüberwachung bekannt. Die von einem IR- Ortungsgerät bei jedem Suchzyklus als Videosignale anfallenden Echtziele werden in einer Daten- Aufbereitungseinrichtung aufbereitet und in einem IR- Signalprozessor entsprechend ihren Elevationswerten und Azimutwerten diskriminiert und gespeichert. Die von den Geräten ermittelten Echtziel- Koordinaten in Elevation und Azimut und Distanz werden einer übergeordneten Feuerleiteinrichtung zugeführt.

Eine Funkmesseinrichtung zur Luftraumüberwachung ist der DE 1 057 788 entnehmbar. Ein 2D -Puls-Dopplerradar wird in der DE 36 88 935 T2 beschrieben. Die DE 39 26 216 A1 offenbart ein Multifunktionsradar. Ein Sekundär- Radarsystem wird in der DE 41 09 981 A1 publiziert.

Bereits mit der DE -PS 977 646 wird ein Verfahren zur Luftraumüberwachung eines größeren Gebietes mit Hilfe von Impuls- Rundsuch- Radargeräten offenbart.

Die DE 198 56 231 A1 legt ein Verfahren zur Überwachung von Flugzeugen offen, welches unter Nutzung von Satelliten abläuft. Mit einem Verfahren zur Raumüberwachung befasst sich auch die DE 100 32 433 A1. Ein Versuch der Positionsbestimmung eines Flugzeuges in einem Dreiweg- DME- System zeigt die DE 36 37 129 C2 auf. US 6 338 011 offenbart ein Verfahren zur Optimierung der Ziel- bestimmung gemäß dem Oberbegriff des Anspruchs 1.

Durch die Vernetzung der Sensoren als auch der Feuerleitgeräte können diese ihre aktuellen Zielzustandsmessungen (Ort und Geschwindigkeit) untereinander austauschen bzw. die Messungen an einen vorzugsweise zentralen Rechner senden. Zur Erstellung der augenblicklichen Luftlage werden die empfangenen Signale der jeweiligen Feuerleitgeräte dahingehend untersucht, ob sie vom selben oder von unterschiedlichen Zielen stammen. Nach erfolgter Zuordnung der in einem Zeitintervall eingegangenen Messungen wird eine Aussage darüber getroffen, wie viele Ziele in einem Luftraum aufgezeichnet werden, welche und wie viele davon neu sind und welche sowie wie viele bekannte Ziele einen aufdatierten Zustand besitzen. Insbesondere die Zuordnung von räumlich eng zusammen fliegenden Zielen ist mit bekannten Verfahren schwierig. Messfehler von Ort und Geschwindigkeit eines Zieles sind eine wesentliche Störquelle für eine korrekte Zuordnung. Die Fehler entstehen in der Regel beim Messvorgang oder bei einem notwendigen Zeitabgleich, was mittels Extrapolation zu einem gemeinsamen Zeitpunkt zum Vergleich mit anderen Messungen geschieht. Messfehler erhöhen die Wahrscheinlichkeit von Fehlzuordnungen. Der weitere Aspekt für Fehler liegt wie bereits erwähnt in der räumlichen Auflösung der bekannten 2D, 2.5D Sensoren, die eine der drei räumlichen Dimensionen gar nicht oder nur ungenügend auflösen können. So wird beispielsweise bei einem 2D Suchradar nur die Entfernung und Azimut eines Ziels bezüglich des Sensors gemessen, über die Elevation liegt hingegen keine Information vor. Bei 2.5D Suchradaren wird der Elevationsbereich des Ziels auf ein Intervall eingeschränkt. Passive elektro- optische Sensoren liefern hingegen Messungen von Azimut und Elevation, jedoch kann die Entfernung des Ziels nicht gemessen werden.

Um die Messungen vergleichen zu können, müssen diese in ein gemeinsames, übergeordnetes Koordinatensystem konvertiert werden. Die Transformation einer lokalen 2D Messung ist nur durch eine Annahme der dritten Dimension in ein anderes dreidimensionales Koordinatensystem möglich. Diese verursacht ein weiteres Anwachsen der Messungenauigkeit bedingt durch eine große Messunsicherheit. Derartige Messungen sind im Allgemeinen schwer unterscheidbar, weshalb sich die Zuordnung erschwert.

Zu den technischen Problemen in Genauigkeit und Auflösung kommt der Zeitaufwand für die Zuordnung hinzu. Bei großen vernetzten Luftabwehrverbänden, die einen zielintensiven Luftraum überwachen, führt die Zuordnung zu einem Rechen- und Zeitaufwand, der nur eine sehr geringe Aufdatierung erlaubt.

Ein Verfahren zur automatischen kombinatorischen Optimierung von Zuordnungen bei der Bahnverfolgung mehrerer sich bewegender Objekte schlägt die DE 44 39 742 C2 vor. Ausgehend von einer mehr oder weniger zufällig gewählten, beliebigen, jedoch gültigen Zuordnungsmatrix wird eine neue Zuordnungsmatrix generiert. Danach wird überprüft, ob diese eine bessere Lösung darstellt als die alte Zuordnungsmatrix. Ist dies der Fall, wird diese Matrix als neuer Ausgangspunkt für eine weitere Suche beibehalten. Durch dieses Verfahren soll eine zeitaufwendige Suche vermieden, eine ausreichende Güte erreicht werden.

Hier stellt sich die Erfindung die Aufgabe, ein Verfahren anzugeben, mit dem eine ausreichend genaue Zuordnung der Ziele bei minimiertem Zeitaufwand vorgenommen werden kann.

Gelöst wird die Aufgabe durch die Merkmale des Patentanspruchs 1.

Der Erfindung liegt die Idee zugrunde, die bekannte Geometrie der Messungen auszunutzen, um sie einander zuzuordnen und um Mehrdeutigkeiten zu lösen, wobei gleichzeitig durch einen räumlichen Schnitt die 3D Position eines Zieles im Raum bestimmt wird.

Für das Wirksamsein des Verfahrens wird vorausgesetzt, dass Translation, Rotation und Skalierung eines jeden Sensors bezüglich eines gemeinsamen Koordinatensystems, in dem sich alle Sensoren eines Verbandes befinden, bekannt sind. Diese Voraussetzung ist zumindest dann als erfüllt ansehbar, wenn ein Luftraumüberwachungssensor eingerichtet worden ist, insbesondere die Nordausrichtung bestimmt und er horizontiert ist, und seine Position beispielsweise mittels GPS bestimmt wurde.

Das Verfahren basiert auf dem Effekt, dass die fehlende Dimension als Messintervall interpretiert werden kann, so dass eine zweidimensionale Messung im übergeordneten System eine 3D Raumkurve entlang der fehlenden Dimension beschreibt. Das Ziel liegt zum Zeitpunkt der Messung auf dieser Kurve, seine 3D Position ist unbekannt. Wenn ein Ziel von zwei 2D Sensoren beobachtet wird, dann schneiden sich die Raumkurven im messfehterfreien Fall am Ort des Ziels. Diese Tatsache aufgreifend löst das Verfahren nunmehr das Zuordnungsproblem durch Projektion der Meldung eines Feuerleitgerätes in die lokale Geometrie der Sensoren der übrigen Feuerleitgeräte.

Das Verfahren umfasst N -1 Schritte pro Messung, wobei N die Anzahl der Sensoren ist. In einem ersten Schritt wird eine Art Mastersensor bestimmt und seine Raumkurve berechnet. Anschließend wird die Kurve in die Geometrie eines anderen, als Slave- Sensor bestimmten Sensors übertragen. Es werden danach die Raumkurven der im vorhergehenden Schritt gewonnenen Korrespondenz berechnet und zusammen mit der Master Kurve in die Geometrie des nächsten, als neuen Slave- Sensor definierten Sensors übertragen. Können durch die neue Information Mehrdeutigkeiten aus dem ersten Schritt gelöst werden, werden die betreffenden Messungen aus der Zuordnungsliste gelöscht. Alle neu hinzukommenden Partner zur Master Messung werden wieder aufgezeichnet. Im letzten Schritt wird der letzte verbleibende Sensor als Slave definiert. Der Master und alle ihm zugeordneten Messungen der bisherigen Slave- Sensoren werden in die lokale Geometrie übertragen und mit den Messungen verglichen. Nach der Zuordnung der lokalen Messung wird überprüft, ob zum Master nur jeweils maximal eine Messung der Slave- Sensoren zugeordnet ist. Ist dies nicht der Fall, wird die Mehrdeutigkeit zu diesem Zeitpunkt mit dem kleinsten Abstand der jeweiligen Messung zum Sensor gelöst. Damit ist die Zuordnung zum Master abgeschlossen. Sämtliche zugeordnete Messungen werden abgespeichert und brauchen für die weitere Betrachtung nicht mehr berücksichtigt zu werden.

Das gleiche Verfahren wird nun solange auf den ersten Master- Sensor angewendet, bis alle Messungen zugeordnet wurden. Anschließend wird ein bisheriger Slave- Sensor zum neuen Master bestimmt und das Verfahren auf die verbleibenden Ziele angewendet.

Die Vorteile dieses Verfahrens lassen sich wie folgt beschreiben. Das Verfahren ermöglicht eine eindeutige Zuordnung von 2D sowie 2.50 Messungen eines Sensorverbundes, wobei alle physikalisch möglichen Zustände verglichen werden, fehlerhafte Annahmen bezüglich der Ziellage entfallen. Jede Messung wird maximal einer Messung eines anderen Sensors zugeordnet, die zudem auf geometrischen Bedingungen beruht und somit die Abhängigkeit der Entscheidung von Abstandsrechnungen reduziert. Die Zuordnung erfolgt des Weiteren individuell für jede Messung, so dass es nicht mehr nötig ist, alle möglichen Korrespondenzen auszurechnen, da Vergleiche mit bereits zugeordneten Messungen entfallen. Dadurch werden der Rechenaufwand sowie die benötigte Zeit verringert. Die Komplexität des Verfahrens ist linear und eignet sich speziell bei Szenarien mit vielen Sensoren und Zielen. Das Verfahren schließt alle möglichen Sensortypen ein, sowohl Suchradare als auch elektrooptische Sensoren oder IR- Sensoren. Je mehr Sensoren Messungen liefern desto verlässlicher und eindeutiger wird das Ergebnis durch die Zunahme räumlicher Informationen. Durch den Raumschnitt wird die 3D Position des Zieles schon während der Zuordnung erkannt / bekannt.

Anhand eines Ausführungsbeispiels mit Zeichnung und ausgehend vom Stand der Technik soll die Erfindung näher erläutert werden.

Es zeigt
- Fig. 1: eine Darstellung der Messungen auf der Anzeige von drei 2D Suchradar Sensoren eines vernetzten Luftabwehrverbandes nach dem Stand der Technik,
- Fig. 2: eine Darstellung der Anzeigen aus Fig. 1 in der X-Y Ebene des übergeordneten Systems nach dem Stand der Technik,
- Fig. 3: eine Darstellung der Zuordnungsmatrix als Resultat aus Fig. 2,
- Fig. 4: eine Projektion einer Raumkurve des ersten Suchradars in die lokale Geometrie des zweiten Suchradars,
- Fig. 5: eine Projektion der Raumkurve des zweiten Suchradars in die lokale Geometrie des dritten Sensors,
- Fig. 6: eine Projektion der Raumkurve des ersten Suchradars in die Projektion nach Fig. 5,
- Fig. 7: eine aus den Zuordnungen bestimmte Zielposition in der X-Y Ebene des übergeordneten Koordinatensystems.

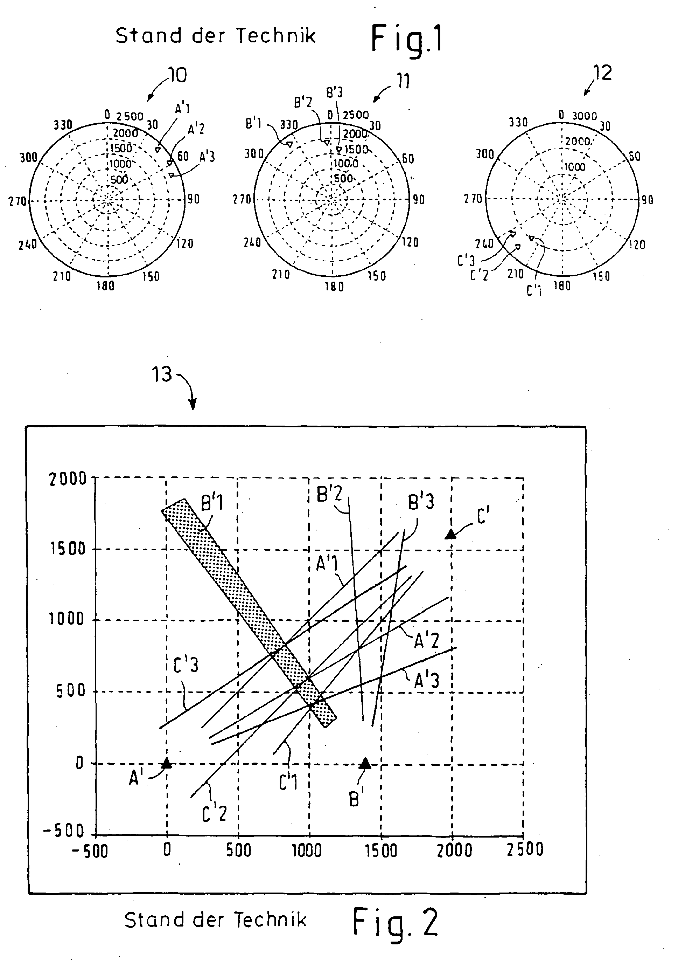

In Fig. 1 ist eine Anzeige 10 eines ersten Suchradar Sensors A sowie eine weitere Anzeige 11 eines zweiten Suchradar Sensors B und eine dritte Anzeige 12 eines dritten Suchradar Sensors C nach dem Stand der Technik dargestellt. In der Anzeige 10 sind Entfernung (Meter) und Richtung (Grad) angegeben. Es werden drei Ziele als A1 - A3 angezeigt. In der Anzeige 11 des zweiten Suchradar Sensors B werden drei Ziele als B1 - B3 und in der Anzeige 12 des dritten Suchradar Sensors C werden drei Ziele als C1 - C3 angezeigt.

Zur Korrelation werden die Messungen in die Geometrie 13 des übergeordneten kartesischen Koordinatensystems gebracht. Hierzu wird die Position des jeweiligen Sensors A, B, C benötigt.

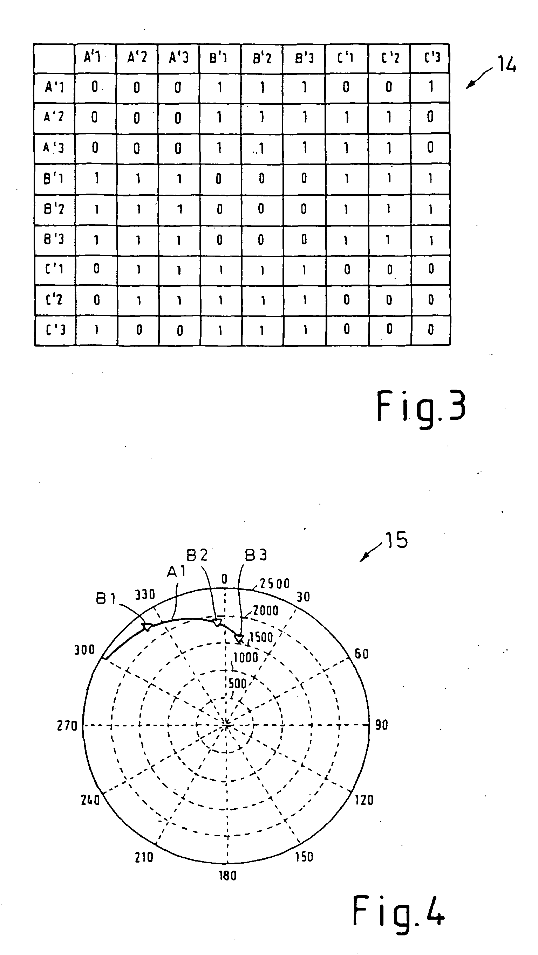

Fig. 2 zeigt die nach dem Stand der Technik bekannte Darstellung der Messung aus Fig. 1 im übergeordneten System. Mit A, B, C sind die Radar Positionen gekennzeichnet, in denen sich die Darstellung / Geometrien der Anzeigen 10 bis 12 ergeben. Die Messungen werden hier auf einer Geraden abgebildet, die jeweils von der Radar Position A, B, C zu den Zielen A1'- A3', B1'- B3' sowie C1'-C3' weisen. Insbesondere die Gerade bzw. Spur B1' zeigt den zusätzlichen Einfluss des Messfehlers auf die Zuordnung nach dem Stand der Technik. Fig. 3 visualisiert in einer Zuordnungsmatrix 14, dass eine eindeutige Zuordnung einer Messung in keinem Fall möglich ist. Jede Messung von A' passt zu jeder Messung von B. Hinzu kommt noch die mögliche Zuordnung von C' zu beiden Sensoren A', B'.

Basierend auf die Anzeigen 10 bis 12 aus der Fig. 1 wird daher im lokalen Sensorkoordinatensystem des Sensors A eine Raumkurve A1 berechnet und nunmehr nach dem neuartigen Verfahren in Fig. 4 in die Anzeige 15 also in die lokale Geometrie des Radars B konvertiert. Hier werden alle für die Zuordnung zu A1 in Frage kommenden Messungen registriert. Im Beispiel sind alle Messungen von B (B1, B2, B3) Zuordnungskandidaten zu A1. Eine eindeutige Zuordnung ist daher nicht möglich, so dass alle Messungen von B im Weiteren zu betrachten sind, wobei nur Messungen entlang der Kurve A1 für eine Zuordnung in Frage kommen. Messungen außerhalb des betreffenden Entfernungs- und Azimut- Bereichs, den die Kurve A1 beschreibt, brauchen nicht verglichen werden. Die Raumkurve A1 schränkt somit den Suchbereich für Zuordnungskandidaten ein und reduziert somit die Anzahl der Vergleiche.

Zur Lösung der Mehrdeutigkeit werden die Raumkurven A1 und B1 - B3 von den zugeordneten Messungen der Sensoren A, B in einem weiteren Schritt in die Geometrie 16 des Sensors C projiziert. Hier werden nun die Mehrdeutigkeiten gelöst.

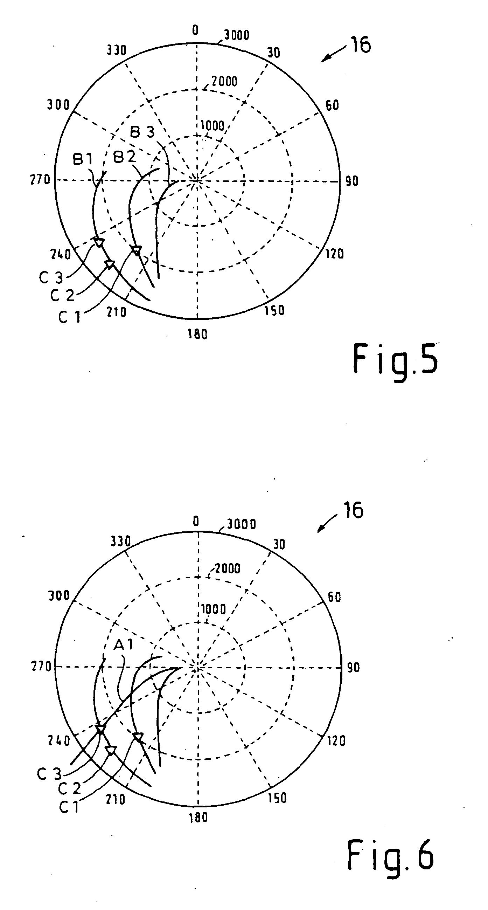

Im Beispiel nach Fig. 4 entstehen bei der Projektion der Raumkurven B1 - B3 in die Geometrie von C weitere Mehrdeutigkeiten. B1 kann sowohl zu C2 als auch C3 zugeordnet werden. B3 lässt sich keiner Messung von C zuordnen. Das Paar B2 - C1 weist jedoch eine eindeutige Zuordnung auf. Die neuen Mehrdeutigkeiten werden nun durch das Projizieren der Raumkurve A1 in die lokale Geometrie von C (Fig. 6) übertragen. A1 schneidet sich mit B1 bei der Messung C3. Diese drei Werte werden einander zugeordnet. Gleichzeitig löst sich damit sowohl das Mehrdeutigkeitsproblem von A1 mit B1- B3 als auch das von B1 mit C2 und C3.

Das Verfahren vereinfacht auch die Zuordnung für A2 und A3, die sich analog bestimmen lassen. Die bereits zugeordneten Messungen C3 und B1 werden für diese nachfolgende Zuordnung nicht mehr betrachtet.

Die Verschneidung der Raumkurven bringt einen weiteren Vorteil mit sich. Da von jedem Punkt der Raumkurve die 3D Lage bekannt ist, lässt sich im Berührungspunkt der lokalen Messung mit der Kurve die zugehörige Elevation direkt ablesen. Somit ist die Lage des Ziels im übergeordneten Koordinatensystem bestimmt.

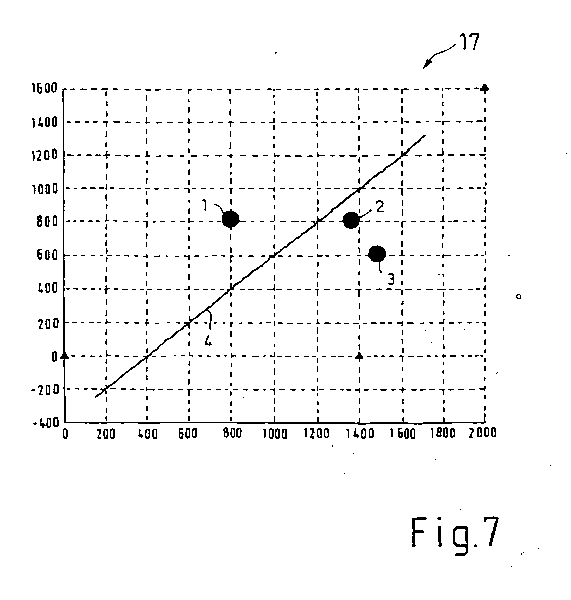

Als Lösung für das beschriebene Beispiel ergeben sich folgende, in Fig. 7 dargestellte Zuordnungen.
Ziel 1: A1 - B1 -C3
Ziel 2: A2 - B2 -C1
Ziel 3: A3 - B3
Ziel 4: C2.

Das Luftbild (Geometrie 17 (^ Geometrie 13) des übergeordneten kartesischen Koordinatensystems) enthält also vier Ziele, wovon drei von mindestens zwei der Sensoren gleichzeitig beobachtet werden und somit eine 3D Position berechenbar ist. Ziel 1 und Ziel 2 werden von allen Sensoren A, B, C beobachtet, während das Ziel 3 nur von A und B gesehen werden kann. Ziel 4 wird nicht von A und B gemessen, weshalb seine Existenz erst durch die korrekte Zuordnung der Messung enthüllt wurde.

## Patentansprüche

1. Verfahren zur automatischen kombinatorischen Optimierung der Zielbestimmung mehrerer sich bewegender Objekte (1, 2, 3) unter zur Hilfenahme von mehreren (N) Sensoren (A, B, C) und deren Geometrien (10, 11, 12), **dadurch gekennzeichnet, dass** ein erster Sensor (A) zum Mastersensor bestimmt und eine Raumkurve (A1) berechnet wird, die anschließend in die Geometrie (11) eines als Slave- Sensor bestimmten Sensors (B) übertragen und in seiner lokalen Geometrie (15) berücksichtigt wird, danach wird ein weiterer Sensor (C) als Slave definiert, in den die Raumkurven (B1 - B3) der im vorhergehenden Schritt gewonnenen Korrespondenz berechnet und zusammen mit der Master Kurve (A1) in die Geometrie (12) des neuen Slave- Sensors (C) übertragen und als neue Geometrie (16) berücksichtigt werden, wobei diese Schritte zumindest solange wiederholt werden, bis in einem letzten Schritt (N-1) der letzte (N) verbleibende Sensor als Slave definiert wird, der Master (A1) und alle ihm zugeordneten Messungen der bisherigen Slave- Sensoren (B, C... N-1) in die lokale Geometrie des letzten (N) Slave- Sensors übertragen und mit den Messungen verglichen werden.

2. Verfahren nach Anspruch 1, **dadurch gekennzeichnet, dass** wenn neue Informationen Mehrdeutigkeiten aus dem vorherigen Schritt lösen, die betreffenden Messungen aus einer Zuordnungsliste (14) gelöscht, jedoch alle neu hinzukommenden aufgezeichnet werden.

3. Verfahren nach Anspruch 1 oder 2, **dadurch gekennzeichnet, dass** nach der Zuordnung der lokalen Messung überprüft wird, ob zum Master (A) nur jeweils maximal eine Messung der Slave Sensoren (B, C) zugeordnet ist, wobei dann, wenn dies nicht der Fall ist, die Mehrdeutigkeit zu diesem Zeitpunkt mit dem kleinsten Abstand der jeweiligen Messung zum Sensor (B, C) gelöst wird, wodurch die Zuordnung zum Master (A) abgeschlossen ist.

4. Verfahren nach Anspruch 1, **dadurch gekennzeichnet, dass** das nach erfolgter Zuordnung des ersten Master- Sensors (A) ein nächster Slave- Sensor (B) zum Master bestimmt und die Schritte auf die verbleibenden Ziele wiederholt werden.

5. Verfahren nach Anspruch 1, **dadurch gekennzeichnet, dass** zur Korrelation die Messungen des Masters in die Geometrie (16) des jeweiligen Slave- Sensors gebracht werden.

6. Verfahren nach einem der vorgenannten Ansprüche, **dadurch gekennzeichnet, dass** mittels der Verschneidung der Raumkurven (A1, B1-B3, C1-C3) von jedem Punkt der Raumkurve (A1, B1-B3, C1-C3) die 3D Lage bekannt ist, wodurch sich im Berührungspunkt der lokalen Messung mit der Kurve (A1, B1-B3, C1-C3) die fehlende Dimension (Elevation / Distanz) direkt ablesen lässt.

7. Verfahren nach den Ansprüchen 1 und 5, **dadurch gekennzeichnet, dass** die Komplexität der Zuordnung, und somit der **dadurch** verursachte Rechenaufwand, **dadurch** reduziert wird, dass die Anzahl der Korrelationen sich auf die Kandidaten entlang der Raumkurven, die in die Geometrie des jeweiligen Slave- Sensors projeziert worden sind, beschränkt.

## Claims

1. Method for automatic combinational optimization of target definition of a plurality of moving objects (1, 2, 3) with the aid of a plurality (N) of sensors (A, B, C) and their geometries (10, 11, 12), **characterized in that** a first sensor (A) is defined as the master sensor and a space curve (A1) is calculated which is then transferred to the geometry (11) of a sensor (B), which is defined as a slave sensor, and is taken into account in its local geometry (15), a further sensor (C) is then defined as a slave, into which the space curves (B1 - B3) of the correspondence obtained in the previous step are calculated and are transferred together with the master curve (A1) to the geometry (12) of the new slave sensor (C) and are taken into account as a new geometry (16), with these steps being repeated at least until, in a final step (N-1), the last (N) remaining sensor is defined as a slave, the master (A1) and all the measurements associated with it of the previous slave sensors (B, C ... N-1) are transferred to the local geometry of the last (N) slave sensor, and are compared with the measurements.

2. Method according to Claim 1, **characterized in that** when new information solves ambiguities from the previous step, the relevant measurements are deleted from an association list (14), but all newly arriving measurements are recorded.

3. Method according to Claim 1 or 2, **characterized in that,** after the association of the local measurement, a check is carried out to determine whether in each case only a maximum of one measurement of the slave sensors (B, C) is associated with the master (A) wherein, if this is not the case, the ambiguity at this time with the shortest distance between the respective measurement and sensor (B, C) is solved, as a result of which the association with the master (A) is closed.

4. Method according to Claim 1, **characterized in that,** after association of the first master sensor (A) has been carried out, a next slave sensor (B) is defined as the master, and the steps are repeated for the remaining targets.

5. Method according to Claim 1, **characterized in that,** for correlation purposes, the measurements of the master are transferred to the geometry (16) of the respective slave sensor.

6. Method according to one of the abovementioned claims, **characterized in that** the 3D situation is known by means of the intersection of the space curves (A1, B1-B3, C1-C3) of each point on the space curve (A1, B1-B3, C1-C3), by which means the missing dimension (elevation/distance) can be read directly at the contact point of the local measurement with the curve (A1, B1-B3, C1-C3).

7. Method according to Claims 1 and 5,
**characterized in that** the complexity of the association process, and therefore the computation effort that this causes, is reduced by restricting the number of correlations to the candidates along the space curves which have been projected into the geometry of the respective slave sensor.

## Revendications

1. Procédé d'optimisation combinatoire automatique de la détermination d'une cible sur plusieurs objets (1, 2, 3) mobiles à l'aide de plusieurs (N) capteurs (A, B, C) et de leurs géométries (10, 11, 12), **caractérisé en ce qu'**un premier capteur (A) est défini en tant que capteur maître et une courbe dans l'espace (A1) est calculée, laquelle est ensuite transmise dans la géométrie (11) d'un capteur (B) défini en tant que capteur esclave et prise en compte dans sa géométrie locale (15), après quoi un autre capteur (C) est défini en tant que capteur esclave, dans lequel les courbes dans l'espace (B1 - B3) de la correspondance obtenue dans l'étape précédente sont calculées et, conjointement avec la courbe maître (A1), transmises dans la géométrie (12) du nouveau capteur esclave (C) et prises en compte en tant que nouvelle géométrie (16), ces étapes étant répétées au moins jusqu'à ce que dans une dernière étape (N-1), le dernier (N) capteur restant est défini en tant que capteur esclave, le maître (A1) ainsi que toutes les mesures qui lui sont affectées des capteurs esclaves (B, C, ..., N-1) actuels sont transmis dans la géométrie locale du dernier (N) capteur esclave et comparés avec les mesures.

2. Procédé selon la revendication 1, **caractérisé en ce que** lorsque de nouvelles informations résolvent les ambiguïtés de l'étape précédente, les mesures concernées sont supprimées d'une liste d'affectation (14), mais toutes les nouvelles qui viennent se rajouter sont cependant enregistrées.

3. Procédé selon la revendication 1 ou 2, **caractérisé en ce qu'**après l'affectation de la mesure locale, un contrôle est effectué pour vérifier si au maximum une mesure des capteurs esclaves (B, C) est à chaque fois affectée au maître (A) et, lorsque ce n'est pas le cas, l'ambiguïté à cet instant est résolue avec le plus petit écart de la mesure correspondante par rapport au capteur (B, C), ce qui permet de déduire l'affectation au maître (A).

4. Procédé selon la revendication 1, **caractérisé en ce qu'**après une affectation réussie du premier capteur maître (A), un capteur esclave (B) suivant est défini en tant que maître et les étapes sont répétées sur les cibles restantes.

5. Procédé selon la revendication 1, **caractérisé en ce que** les mesures du maître sont à chaque fois amenées dans la géométrie (16) du capteur esclave correspondant en vue de la corrélation.

6. Procédé selon l'une des revendications précédentes, **caractérisé en ce que** la position 3D de chaque point de la courbe dans l'espace (A1, B1-B3, Cl-C3) est connue à partir de l'intersection des courbes dans l'espace (A1, B1-B3, C1-C3), la dimension manquante (élévation / distance) pouvant être lue directement au point de contact de la mesure locale avec la courbe (A1, B1-B3, C1-C3).

7. Procédé selon les revendications 1 et 5, **caractérisé en ce que** la complexité de l'affectation et ainsi l'effort de calcul qui en résulte est réduit **en ce que** le nombre de corrélations se limite aux candidats le long des courbes dans l'espace qui ont été projetées dans la géométrie du capteur esclave correspondant.
